# EUROPÄISCHE PATENTSCHRIFT

(11) **EP 3 440 377 B1**
(45) Veröffentlichungstag und Bekanntmachung des Hinweises auf die Patenterteilung: **15.07.2020**
(21) Anmeldenummer: 17713671.0
(22) Anmeldetag: 27.03.2017
(51) Int. Cl.: F16F 9/54, F16F 9/04

(54) **LUFTFEDERDECKEL**
AIR SPRING COVER
ÉLÉMENT DE RECOUVREMENT DE RESSORT PNEUMATIQUE

(30) Priorität: 05.04.2016 US 201662318279 P; 07.04.2016 DE 102016205741
(43) Veröffentlichungstag der Anmeldung: 13.02.2019
(73) Patentinhaber: Continental Teves AG & Co. OHG, 60488 Frankfurt am Main (DE)
(72) Erfinder: PIELOCK, Ralf, 29690 Essel (DE); NESSEL, Andreas, 30916 Isernhagen (DE); TATTER, Susanne, 30161 Hannover (DE); SCHALLMEIER, Christian, 88299 Leutkirch (DE); PNIEWSKI, Garrett Mark, Bloomfield Hills Michigan 48301 (US); MAKKAR, Sunny, 48083 Troy, Michigan (US); MANGA, Kranti Kiran, Rochester Hills Michigan 48307 (US)
(86) Internationale Anmeldenummer: PCT/EP2017/057218
(87) Internationale Veröffentlichungsnummer: WO 2017/174390

(56) Entgegenhaltungen:
- EP-A1- 1 424 506
- WO-A1-2008/031649
- DE-A1-102010 038 238
- DE-A1-102012 002 433
- DE-A1-102013 212 982

## Beschreibung

Die Erfindung betrifft ein Luftfederbein gemäß dem Oberbegriff von Anspruch 1.

Ein Luftfederbein dient zum Federn und Dämpfen eines Kraftfahrzeugfahrwerks gegenüber der Kraftfahrzeugkarosserie. In der Regel umfasst das Luftfederbein eine Luftfeder und einen integrierten Stoßdämpfer. Die Luftfeder besteht dabei im Wesentlichen aus einem Luftfederdeckel, einem Luftfederkolben und einem dazwischen eingespannten Luftfederbalg. Der innerhalb der Luftfeder angeordnete Stoßdämpfer ist einerseits mit einem Radträger verbunden und andererseits über seine Kolbenstange mit einem Dämpferlager im Luftfederdeckel befestigt bzw. gelagert. Der Luftfederdeckel wird mit der Fahrzeugkarosserie verbunden, womit die Stoßdämpferkräfte über den Luftfederdeckel auf die Karosserie wirken.

Daher sind die meist einteilig ausgeführten Luftfederdeckel aus Metall gefertigt, denn diese können die wirkenden Kräfte besser aufnehmen und haben eine hohe Lebensdauer. Allerdings unterliegen aus Metall gefertigte Luftfederdeckel vielen Bearbeitungsschritten und Umformvorgängen. Um den Funktionsanforderungen gerecht zu werden, sind teilweise komplizierte und in hohem Maße zu bearbeitende Teile erforderlich, welche in vielen Fertigungsschritten entstehen und hohe Kosten verursachen.

Zur Gewichtsreduzierung können Luftfederdeckel auch aus Kunststoff gefertigt werden, welche allerdings bei hohen Temperaturen Fließprozessen unterliegen. Um die auf den Luftfederdeckel wirkenden Kräfte des Stoßdämpfers entsprechend aufnehmen zu können, werden eingebettete Verstärkungsringe verwendet, welche allerdings wiederum den Herstellungsaufwand und die Kosten erhöhen.

Aus der DE 102013212982 A1 ist ein Luftfederdeckel bekannt, der zur Gewichtsreduzierung aus zwei Teilen gefertigt ist, wobei diese aus unterschiedlichen Metallen sind.

Aus der gattungsbildenden EP 1 424 506 A1 ist ein Luftfederbein bekannt, bei welcher das Dämpferlager in einer topfförmigen Aufnahmekammer aus Stahl oder Aluminium angeordnet ist, wobei die Aufnahmekammer von einem Kunststoffgehäuse umgeben ist, an welchem der Luftfederbalg angebunden ist.

Es ist Aufgabe der Erfindung, einen verbesserten Luftfederdeckel eines Luftfederbeins bereitzustellen, welcher einfach und kostengünstig herzustellen und dennoch ausreichend stabil ist.

Die der Erfindung zugrundeliegende Aufgabe wird mit den Merkmalen des unabhängigen Patentanspruchs gelöst.

Es wird ein Luftfederbein für ein Kraftfahrzeug bereitgestellt, wobei das Luftfederbein eine Luftfeder mit einem Stoßdämpfer zur Federung und Dämpfung von Schwingungen eines Kraftfahrzeugfahrwerkes umfasst. Die Luftfeder umfasst einen Luftfederdeckel und einen Luftfederkolben, wobei zwischen Luftfederdeckel und Luftfederkolben ein luftdicht eingespannter Luftfederbalg aus elastomerem Material teilweise einen mit Druckluft befüllten Arbeitsraum begrenzt und unter Ausbildung einer Rollfalte am Luftfederdeckel und/oder Luftfederkolben abrollt, wobei der Luftfederdeckel zweiteilig mit einem ersten Deckelteil zur Aufnahme eines Dämpferlagers und mit einem zweiten Deckelteil zur Befestigung des Luftfederbalges ausgeführt ist, wobei das erste Deckelteil aus Metall und das zweite Deckelteil aus Kunststoff gefertigt ist.

Es hat sich erwiesen, dass der Luftfederdeckel den Zug- und Druckkräften des Stoßdämpfers mittels des aus Metall gefertigten ersten Deckelteils stand hält und unterdessen das zweite Deckelteil aus Kunststoff gefertigt werden kann, ohne das es im Dauerbetrieb zu einem Versagen der gesamten Konstruktion kommt. Das aus Kunststoff gefertigte zweite Deckelteil hat somit den Vorteil, dass dieses hinsichtlich einer effektiven Luftfederbalglenkung und Luftfederbalgklemmung frei gestaltet werden kann. Die Trennung der Hauptfunktionen des Luftfederdeckels (Krafteinleitung und Balglenkung) ermöglicht es, die unterschiedlichen Bauteile hinsichtlich ihrer Toleranzbereiche besser zu gestalten. Weiterhin zeichnet sich der Luftfederdeckel durch eine einfache Gestaltung ohne aufwendige mechanische Nachbearbeitung aus. Das erste Deckelteil unterliegt einem Stanz- und Biegeprozess, wobei das zweite Deckelteil in beliebiger Form gespritzt werden kann. So ist eine kostengünstige Gestaltung eines Luftfederdeckels realisiert, welche sich durch die Kombinationen von Bauteilen aus Metall und Kunststoff auszeichnet. Durch die Verwendung von Metall im ersten Deckelteil und der möglichst geringen Verwendung von Kunststoff im zweiten Deckelteil, wird ein sehr geringes Gesamtgewicht bei hoher Belastbarkeit des Luftfederbeines erlangt.

Erfindungsgemäß sind das erste und zweite Deckelteil topfförmig ausgebildet, wobei das erste Deckelteil in den zweiten Deckelteil eingelegt ist. Die topfförmige Ausgestaltung des ersten metallischen Deckelteils dient dazu, ein Dämpferlager eines Stoßdämpfers aufzunehmen und die Zug- und Druckkräfte des Stoßdämpfers über das Dämpferlager unmittelbar in die Kraftfahrzeugkarosserie zu leiten. Bevorzugt liegen die Böden des ersten und zweiten Deckelteils plan aufeinander. Vorzugsweise sind die Böden konkav geformt. Die Druckkräfte des Stoßdämpfers werden über den plan aufliegenden Boden des zweiten Deckelteils aus Kunststoff unmittelbar in den Boden des ersten metallischen Deckelteils überführt und somit weiter in die Kraftfahrzeugkarosserie geleitet. Zusätzlich ist es für die Kraftleitung vorteilhaft, dass die jeweiligen Seitenwände der Deckelteile bevorzugt senkrecht zu den Böden ausgerichtet sind. Das zweite topfförmige Deckelteil gestaltet sich besonders bevorzugt in der Weise, dass am Außenumfang eine Abrollfläche für die obere Rollfalte des Luftfederbalges bereitgestellt wird, welche hinsichtlich einer vorteilhaften Balglenkung gestaltbar ist.

Im Fertigungsprozess des Luftfederdeckels wird das erste Deckelteil vorteilhafterweise durch einen Tiefzieh- oder Stanz/Biegeprozess hergestellt, wobei das erste Deckelteil bevorzugt aus Stahl, alternativ aus Aluminium, Aluminiumguß oder einem Schmiedeteil gefertigt ist. Aufgrund dessen, das keine aufwendigen Hinterschneidungen notwendig sind, wird das zweite Deckelteil auf einfache Art und Weise aus Kunststoff gespritzt oder gepresst. Bevorzugt ist das zweite Deckelteil durch Glasfasern verstärkt, wodurch eine höhere Belastbarkeit des zweiten Deckelteils bei möglichst geringem Gewicht erlangt wird.

Nach einer bevorzugten Ausführungsform ist radial zwischen dem ersten und zweiten Deckelteil ein Dichtelement angeordnet. Vorteilhafterweise ist durch das Dichtelement eine druckdichte Verbindung zwischen dem ersten und zweiten Deckelteil gegenüber dem Innendruck der Luftfeder realisiert. Besonders bevorzugt ist das Dichtelement im Bereich einer oberen Biegekante oder einer unteren Biegekannte des ersten Deckelteils angeordnet. Im Montageprozess wird das Dichtelement entweder an der zylindrischen Fläche des ersten Deckelteils oder an der oberen oder unteren Biegekante des ersten Deckelteils positioniert. Eine Kombination aus je einem Dichtelement an der oberen und unteren Biegekante ist ebenfalls denkbar.

Nach einer weiteren bevorzugten Ausführungsform ist radial zwischen dem ersten und zweiten Deckelteil eine Hülse angeordnet. Vorzugsweise ist die Hülse aus Kunststoff gefertigt. Ebenfalls bevorzugt ist die Hülse durch Glasfasern verstärkt, wodurch eine höhere Belastbarkeit bei möglichst geringem Gewicht erlangt wird. Besonders bevorzugt ist das Dichtelement in axialer Richtung unterhalb der Hülse angeordnet. Ebenfalls besonders bevorzugt kann das Dichtelement als anvulkanisierte Dichtlippe an der Hülse ausgeführt sein, dies erleichtert den Montageprozess und erfüllt dennoch die Dichtigkeitsanforderungen. Die Hülse führt im Zusammenspiel mit dem Dichtelement zu einer verstärkten Abdichtung der beiden Deckelteile gegenüber dem Arbeitsraum der Luftfeder. Die Hülse liegt mit dem oberen Ende an der oberen Biegekante des ersten Deckelteils an. Der Zusammenbau ist dahingehend vorteilhaft, dass zunächst die Hülse auf das erste Deckelteil geschoben wird, anschließend wird das Dichtungselement auf das erste Deckelteil geschoben und gleichzeitig an der Hülse positioniert, woraufhin abschließend das zweite Deckelteil auf den ersten Deckelteil geschoben wird. Dadurch kann der Luftfederdeckel aus einer Montagerichtung zusammengebaut werden, wodurch eine Umpositionierung im Montageprozess wegfällt.

Nach einer weiteren bevorzugten Ausführungsform weist das zweite Deckelteil an dem, dem Luftfederkolben zugewandten Ende eine Ausnehmung für eine Zusatzfeder auf. Besonders bevorzugt ist die Ausnehmung für eine Zusatzfeder als separater Zusatzfedertopf ausgeführt, wobei der Zusatzfedertopf vorzugsweise aus Kunststoff oder Metall gefertigt sein kann. Wenn das erste und das zweite Deckelteil topförmig ausgebildet sind und die jeweiligen Böden plan und press aufeinander liegen, wird die von der Zusatzfeder aufgenommene Kraft des Stoßdämpfers über das zweite Deckelteil unmittelbar in den aus Metall gefertigten ersten Deckelteil geleitet, wodurch das erste Deckelteil die Kräfte vorteilhaft in die Kraftfahrzeugkarosserie leiten kann.

Nach einer weiteren bevorzugten Ausführungsform ist im ersten Deckelteil das Dämpferlager des Stoßdämpfers angeordnet. Das aus Metall gefertigte erste Deckelteil ist durch die Topfform darauf ausgelegt das Dämpferlager des Stoßdämpfers aufzunehmen und die einwirkenden Kräfte leiten zu können, ohne dass es zu einem Versagen des Luftfederdeckels kommt. Vorteilhafterweise bildet eine obere Rollfalte des Luftfederbalges ein Kardanikgelenk in Höhe des Dämpferlagers. Dadurch wirken deutlich geringere Seitenkräfte auf das Luftfederbein und die gesamte kardanische Auslenkung des Luftfederbeins fällt geringer aus.

Bevorzugt ist eine Verschlusskappe zur Abdichtung im ersten Deckelteil oberhalb des Dämpferlagers angeordnet. Vorzugsweise ist die Verschlusskappe aus einem Kunststoff gefertigt. Weiterhin ist die Verschlusskappe vorzugsweise über eine Scheibe und einen verpressbaren Sicherungsring oder einen Seegering am ersten Deckelteil gesichert. Oberhalb der Scheibe und der Verschlusskappe kann besonders bevorzugt ein elastomeres Dichtelement angeordnet sein. Durch diese konstruktiven Merkmale wird der Arbeitsraum des Luftfederbalges nach außen hin abgedichtet, wobei der Arbeitsraum über einen Luftanschluss in der Verschlusskappe mit Luft befüllt werden kann. Vorteilhafterweise kann die Scheibe mittels Sicherungsring mit dem ersten Deckelteil verpresst werden, wodurch auf einen Fertigungsschritt zum Erzeugen einer Nut in das erste Deckelteil verzichtet werden kann.

Ebenfalls bevorzugt ist radial zwischen dem ersten Deckelteil und der Verschlusskappe ein weiteres Dichtelement angeordnet. Vorzugsweise ist das weitere Dichtelement als anvulkanisierte Dichtlippe an der Verschlusskappe ausgeführt. Dadurch wird die mit Druckluft gefüllte Luftfeder sicher abgedichtet. Vorzugsweise verfügt die Verschlusskappe über einen Luftanschluss zum Befüllen der Luftfeder.

Nach einer weiteren bevorzugten Ausführungsform sind zur gegegenseitigen Verdrehsicherung des ersten und zweiten Deckelteils das erste und zweite Deckelteil mittels eines Klebstoffs oder mittels einer Presspassung oder einem Formschluss gesichert. Bevorzugt kann mittels einem axialem Formschluss zwischen dem ersten Deckelteil und mindestens einem Befestigungselement die Verdrehsicherung gewährleistet werden, wobei das Befestigungselement zwischen einer Umschlagsfläche der oberen Biegekante des ersten Deckelteils und dem zweiten Deckelteil angeordnet ist. Dabei ist vorteilhafterweise an einer Auflagefläche des Befestigungselements eine Ringwulst ausgebildet, welche sich in die Unterseite der Umschlagsfläche des ersten Deckelteils presst. Die Verdrehsicherung ist notwendig, damit sich im Betrieb die beiden Deckelteile nicht verschieben und es zu einem Versagen des Luftfederbeins kommt.

Verwendung findet das Luftfederbein in einem Fahrwerk, vorzugsweise in einem Luftfedersystem, für ein Kraftfahrzeug.

Weitere bevorzugte Ausführungsformen der Erfindung ergeben sich aus den Unteransprüchen und der nachfolgenden Beschreibung von Ausführungsbeispielen an Hand der Figuren.

### Es zeigen

- Fig. 1: einen ersten beispielsgemäßen Luftfederdeckel,
- Fig. 2: einen zweiten beispielsgemäßen Luftfederdeckel,
- Fig. 3: einen dritten beispielsgemäßen Luftfederdeckel und
- Fig. 4: einen vierten beispielsgemäßen Luftfederdeckel.

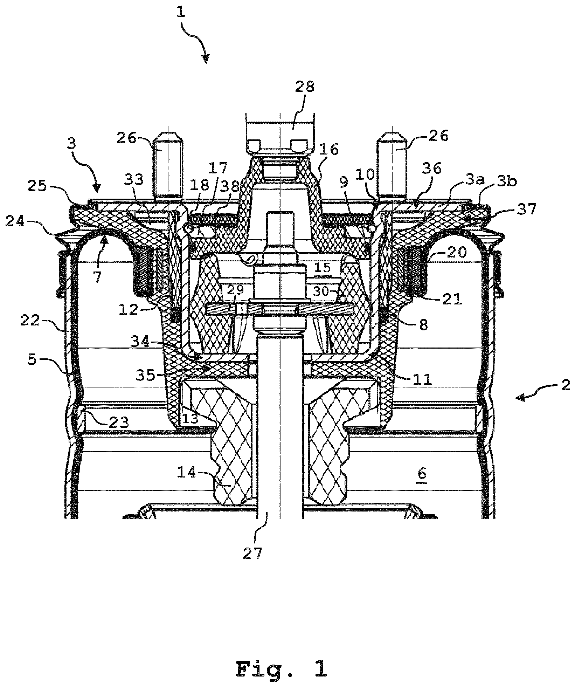

Fig. 1 zeigt einen Ausschnitt eines Luftfederbeins 1 mit einem beispielsgemäßen Luftfederdeckel 3. Das teilweise gezeigte Luftfederbein 1 umfasst eine Luftfeder 2 und nicht näher dargestellt einen integrierten Stoßdämpfer mit seiner Kolbenstange 27. Luftfeder 2 umfasst einen Luftfederdeckel 3, einen nicht näher dargestellten Luftfederkolben und einen dazwischen eingespannten Luftfederbalg 5. Luftfederbalg 5 umfasst teilweise einen Arbeitsraum 6 und mittels Innenspannring 23 ist eine hülsenförmige Ausführung 22 am Luftfederbalg 5 fixiert.

Luftfederdeckel 3 ist zweiteilig mit einem ersten Deckelteil 3a und einem zweiten Deckelteil 3b ausgebildet, wobei das erste Deckelteil 3a aus Metall und das zweite Deckelteil 3b aus Kunststoff gefertigt ist. Erstes und zweites Deckelteil 3a, 3b sind topfförmig ausgebildet, wobei erstes Deckelteil 3a in zweites Deckelteil 3b eingelegt ist. Erstes Deckelteil 3a umfasst eine obere Biegekannte 10 und eine untere Biegekannte 11. Zweites Deckelteil 3b ist um das erste Deckelteil 3a herum geformt und liegt beispielsweise an der unteren Biegekante 11 entsprechend an. Die Böden 34, 35 der Deckelteile 3a, 3b liegen dabei plan und press aufeinander, wobei Böden 34, 35 auch konkav geformt sein können. Zur gegenseitigen Verdrehsicherung der beiden Deckelteile 3a, 3b können diese verklebt werden oder die Toleranzfelder der beiden Deckelteile 3a, 3b werden hinsichtlich einer Presspassung ausgelegt. Ebenfalls können die beiden Deckelteile 3a, 3b durch Ausformungen per Formschluss gesichert werden.

Zwischen ersten und zweiten Deckelteil 3a, 3b ist in radialer Ausrichtung zur Längsachse des Luftfederbeins 1 Hülse 12 und Dichtelement 8 angeordnet, wobei Dichtelement 8 unterhalb oder in axialer Richtung zur Hülse 12 an einem Vorsprung des zweiten Deckelteils 3b positioniert ist. Somit wird eine gratfreie Ringnut für das Dichtelement 8 realisiert. Hülse 12 erstreckt sich bis unterhalb zum ersten Deckelteil 3a. Mittels Dichtelement 8 und Hülse 12 ist eine druckdichte Verbindung der beiden Deckelteile 3a, 3b gegenüber dem Innendruck des Arbeitsraumes 6 der Luftfeder 2 realisiert.

Erstes und zweites Deckelteil 3a, 3b weisen jeweils am Boden 34, 35 eine Ausnehmung bzw. eine Durchgangsbohrung für Kolbenstange 27 auf. Im ersten Deckelteil 3a ist Kolbenstange 27 des Stoßdämpfers über ein Dämpferlager 15 gelagert. Kolbenstange 27 ist im Detail mittels Dämpfungselement 30 mit Tragscheibe 29 gelagert, wobei Dämpfungselement 30 im ersten Deckelteil 3a sitzt und Kolbenstange 27 an Tragscheibe 29 fixiert ist. Tragscheibe 29 weist eine oder mehrere Öffnungen zur Luftüberströmung auf.

Verschlusskappe 16 dichtet den Arbeitsraum 6 des Luftfederbalges 5 oberhalb des Dämpferlagers 15 am ersten Deckelteil 3a ab. Dabei ist radial zwischen ersten Deckelteil 3a und Verschlusskappe 16 ein weiteres Dichtelement 9 vorgesehen. Verschlusskappe 16 wird über eine Scheibe 17, z.B. aus Metall, und einen Sicherungsring 18 mit dem ersten Deckelteil 3a befestigt, wobei oberhalb der Scheibe 17 und der Verschlusskappe 16 ein weiteres elastomeres Dichtelement 38 aufliegt. Verschlusskappe 16 weist einen Luftanschluss 28 zum Anschluss des Luftfederbeins 1 an ein Luftfedersystem auf. Mittels Luftanschluss 28 wird Luft über die Öffnungen der Tragscheibe 29 und den Durchgangsbohrungen des ersten und zweiten Deckelteils 3a, 3b entlang der Kolbenstange 27 in den Arbeitsraum 6 des Luftfederbalgs 5 geleitet.

Zweites Deckelteil 3b weist an seinem dem Luftfederkolben zugewandten Ende eine Ausnehmung 13 für eine Zusatzfeder 14 auf. Beim Einfedern bewegt sich der Luftfederkolben bzw. der Stoßdämpfer auf den Luftfederdeckel zu, daher dient die in Ausnehmung 13 angeordnete Zusatzfeder 14 als Wegbegrenzung und dämpft mögliche auf den Luftfederdeckel 3 einwirkende Kräfte ab.

Erstes Deckelteil 3a dient der Aufnahme des Dämpferlagers 15 und ist daher derart ausgelegt, dass Zug- und Druckkräfte des Stoßdämpfers aufgenommen werden können. Die Stoßdämpferzugkräfte werden unmittelbar über Dämpferlager 15 in das erste Deckelteil 3a und somit weiter in die Fahrzeugkarosserie geleitet. Die Stoßdämpferdruckkräfte werden unmittelbar über das zweite Deckelteil 3b in das erste Deckelteil 3a geleitet und somit weiter in die Fahrzeugkarosserie. Am zweiten Deckelteil 3b ist Luftfederbalg 5 befestigt und rollt unter Ausbildung einer oberen Rollfalte 7 an einer Abrollfläche des Deckelteils 3b ab. So ist zweites Deckelteil 3b dahingehend ausgelegt, dass es den Luftfederbalglenkungsanforderungen gerecht wird.

Das zweite Deckelteil 3b weist eine Aufnahme 25 zur Befestigung eines Faltenbalges 24 auf, wobei Faltenbalg 24 am oberen Ende der Außenführung 22 befestigt ist. Mittels Faltenbalg 24 wird obere Rollfalte 7 des Luftfederbalges 5 vor Verschmutzung geschützt.

Luftfederbalg 5 ist mit seinem oberen Ende mittels Spannring 20 am zweiten Deckelteil 3b dichtend befestigt. Im zweiten Deckelteil 3b ist auf Höhe der Befestigung von Luftfederbalg 5 mittels Spannring 20 ein Verstärkungsring 21 eingebracht. Mittels Verstärkungsring 21 wird die Befestigung von Luftfederbalg 5 durch Spannring 20 gesteigert und somit eine höhere Dichtigkeit erzielt.

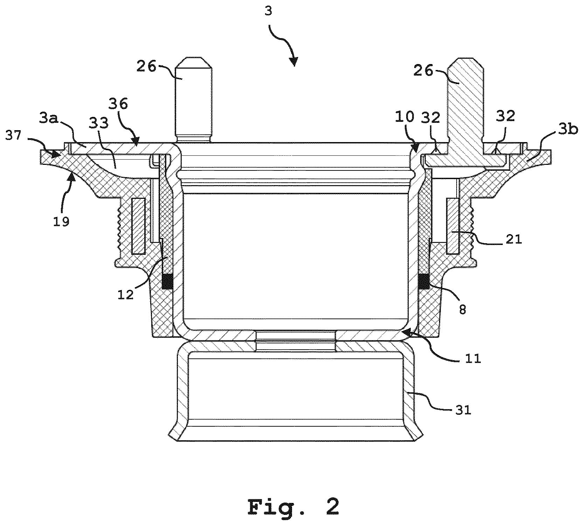

Luftfederdeckel 3 weist ein oder mehrere Befestigungselemente 26 zur Befestigung an eine Fahrzeugkarosserie auf. Diese sind zwischen den Umschlagsflächen 36, 37 der jeweiligen oberen Biegekante des ersten und zweiten Deckelteils 3a, 3b angeordnet. Das zweite Deckelteil 3b sieht an der oberen Seite der Umschlagsfläche 37 eine entsprechende Ausnehmung 33 vor, wobei das erste Deckelteil 3a an der Umschlagsfläche 36 entsprechende Durchgangsbohrungen für das Befestigungselement 26 aufweist. Eine Auflagefläche des Befestigungselements 26 liegt an der unteren Seite der Umschlagsfläche des ersten Deckelteils 3a an. Somit kann Luftfederdeckel 3 mit der Fahrzeugkarosserie beispielsweise durch Bolzen gesichert oder verschraubt werden. Fig. 2 zeigt einen zweiten beispielsgemäßen Luftfederdeckel 3, welcher weitgehend dem Luftfederdeckel aus Fig. 1 entspricht und sich dadurch unterscheidet, dass die Ausnehmung für die Zusatzfeder als separater Zusatzfedertopf 31 an dem Luftfederkolben zugewandten Ende des zweiten Deckelteils 3b ausgebildet ist, wobei Zusatzfedertopf 31 aus Kunststoff oder Metall gefertigt und die Zusatzfeder in Zusatzfedertopf 31 angeordnet sein kann. Ebenfalls weist Zusatzfedertopf 31 eine Ausnehmung bzw. Durchgangsborhung für die Kolbenstange des Stoßdämpfers auf. Bezüglich der von der Zusatzfeder aufgenommen Kräfte ist der aus Metall gefertigte Zusatzfedertopf 31 vorteilhaft, da dieser höhere Kräfte aufnehmen und in das erste Deckelteil 3a weiterleiten kann.

Zur gegenseitigen Verdrehsicherung der beiden Deckelteile 3a, 3b wird ein axialer Formschluss zwischen dem ersten Deckelteil 3a und einem oder mehreren Befestigungselementen 26 erzeugt. Dabei ist an der Auflagefläche des Befestigungselements 26 eine umlaufende Ringwulst 32 vorgesehen, welche in die Unterseite der Umschlagsfläche 36 des ersten Deckelteils 3a verschweißt wird. Alternativ können Befestigungselemente 26 durch Rändelschrauben realisiert sein.

Ebenfalls weist das zweite Deckelteil 3b die Abrollfläche 19 für die obere Rollfalte des Luftfederbalges auf, welche als Kardanikgelenk wirkt.

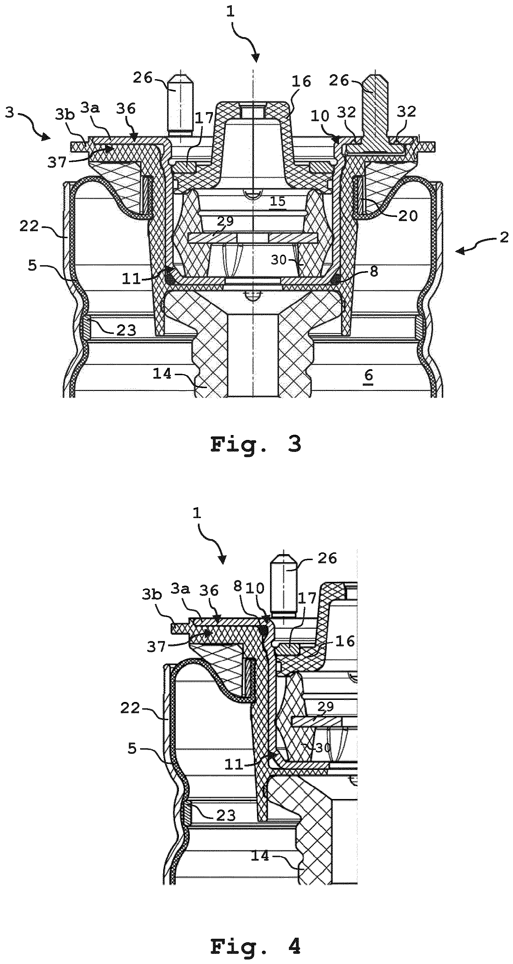

Fig. 3 zeigt einen Ausschnitt eines Luftfederbeins 1 mit einem dritten beispielsgemäßen Luftfederdeckel 3. Luftfederdeckel 3 ist zweiteilig mit einem ersten Deckelteil 3a und einem zweiten Deckelteil 3b ausgebildet, wobei erstes und zweites Deckelteil 3a, 3b topfförmig ausgebildet sind und erstes Deckelteil 3a in zweites Deckelteil 3b eingelegt ist. Erstes Deckelteil 3a umfasst eine obere Biegekante 10 und eine untere Biegekante 11.

Zwischen ersten und zweiten Deckelteil 3a, 3b ist Dichtelement 8 an einer unteren Biegekante 11 des ersten Deckelteils 3a angeordnet. Mittels Dichtelement 8 ist eine druckdichte Verbindung der beiden Deckelteile 3a, 3b gegenüber dem Innendruck des Arbeitsraumes 6 Luftfeder 2 realisiert.

Fig. 4 zeigt die linke Schnitthälfte eines vierten beispielsgemäßen Luftfederdeckels 3, wobei einzig im Unterschied zur Fig. 3, das Dichtelement 8 zwischen ersten und zweiten Deckelteil 3a, 3b an einer oberen Biegekante 10 des ersten Deckelteils 3a angeordnet ist. Somit wird ebenfalls eine druckdichte Verbindung realisiert.

### Bezugszeichenliste

- 1: Luftfederbein
- 2: Luftfeder
- 3: Luftfederdeckel
- 3a: erstes Deckelteil
- 3b: zweites Deckelteil
- 4: Luftfederkolben
- 5: Luftfederbalg
- 6: Arbeitsraum
- 7: Rollfalte
- 8: Dichtelement
- 9: Dichtelement
- 10: obere Biegekante
- 11: untere Biegekante
- 12: Hülse
- 13: Ausnehmung
- 14: Zusatzfeder
- 15: Dämpferlager
- 16: Verschlusskappe
- 17: Scheibe
- 18: Sicherungsring
- 19: Abrollfläche
- 20: Spannring
- 21: Verstärkungsring
- 22: Außenführung
- 23: Innenspannring
- 24: Faltenbalg
- 25: Aufnahme
- 26: Befestigungselement
- 27: Kolbenstange
- 28: Luftanschluss
- 29: Tragscheibe
- 30: Dämpfungselement
- 31: Zusatzfedertopf
- 32: Ringwulst
- 33: Ausnehmung
- 34: Boden
- 35: Boden
- 36: Umschlagsfläche
- 37: Umschlagsfläche
- 38: Dichtelement

## Patentansprüche

1. Luftfederbein (1) für ein Kraftfahrzeug umfassend eine Luftfeder (2) mit einem Stoßdämpfer zur Federung und Dämpfung von Schwingungen eines Kraftfahrzeugfahrwerkes, wobei die Luftfeder (2) einen Luftfederdeckel (3) und einen Luftfederkolben umfasst, wobei zwischen Luftfederdeckel (3) und Luftfederkolben ein luftdicht eingespannter Luftfederbalg (5) aus elastomerem Material teilweise einen mit Druckluft befüllten Arbeitsraum (6) begrenzt und unter Ausbildung einer Rollfalte (7) am Luftfederdeckel (3) und/oder Luftfederkolben abrollt, wobei der Luftfederdeckel (3) zweiteilig mit einem ersten Deckelteil (3a) zur Aufnahme eines Dämpferlagers (15) und mit einem zweiten Deckelteil (3b) zur Befestigung des Luftfederbalges (5) ausgeführt ist, wobei erste Deckelteil (3a) aus Metall und das zweite Deckelteil (3b) aus Kunststoff gefertigt ist, **dadurch gekennzeichnet, dass** das erste und zweite Deckelteil (3a, 3b) topfförmig ausgebildet sind, wobei das erste Deckelteil (3a) in den zweiten Deckelteil (3b) eingelegt ist.

2. Luftfederbein (1) nach Anspruch 1, **dadurch gekennzeichnet, dass** Böden (34, 35), insbesondere konkav geformt, des ersten und zweiten Deckelteils (3a, 3b) plan aufeinander liegen.

3. Luftfederbein (1) nach Anspruch 1 oder 2, **dadurch gekennzeichnet, dass** radial zwischen dem ersten und zweiten Deckelteil (3a, 3b) ein Dichtelement (8) angeordnet ist.

4. Luftfederbein (1) nach Anspruch 3, **dadurch gekennzeichnet, dass** das Dichtelement (8) im Bereich einer oberen oder einer unteren Biegekante (10, 11) des ersten Deckelteils (3a) angeordnet ist.

5. Luftfederbein (1) nach einem der Ansprüche 1 bis 3, **dadurch gekennzeichnet, dass** radial zwischen dem ersten und zweiten Deckelteil (3a, 3b) eine, insbesondere aus Kunststoff gefertigte, Hülse (12) angeordnet ist.

6. Luftfederbein (1) nach Anspruch 5, wenn rückbezogen auf Anspruch 3, **dadurch gekennzeichnet, dass** unterhalb der Hülse (12) das Dichtelement (8) angeordnet ist.

7. Luftfederbein (1) nach einem der Ansprüche 1 bis 6, **dadurch gekennzeichnet, dass** das zweite Deckelteil (3b) an seinem dem Luftfederkolben zugewandten Ende eine Ausnehmung (13) für eine Zusatzfeder (14) aufweist.

8. Luftfederbein (1) nach Anspruch 7, **dadurch gekennzeichnet, dass** die Ausnehmung (13) als ein separater, insbesondere aus Kunststoff oder Metall gefertigter, Zusatzfedertopf (31) ausgeführt ist.

9. Luftfederbein (1) nach einem der Ansprüche 1 bis 8, **dadurch gekennzeichnet, dass** im ersten Deckelteil (3a) das Dämpferlager (15) des Stoßdämpfers angeordnet ist.

10. Luftfederbein (1) nach Anspruch 9, **dadurch gekennzeichnet,** das eine, insbesondere aus Kunststoff gefertigte, Verschlusskappe (16) zur Abdichtung am ersten Deckelteil (3a) oberhalb des Dämpferlagers (15) angeordnet ist, wobei insbesondere die Verschlusskappe (16) über eine Scheibe (17) und einen verpressbaren Sicherungsring (18) am ersten Deckelteil (3a) gesichert ist.

11. Luftfederbein (1) nach Anspruch 10, **dadurch gekennzeichnet, dass** radial zwischen dem ersten Deckelteil (3a) und der Verschlusskappe (16) ein weiteres Dichtelement (9) angeordnet ist.

12. Luftfederbein (1) nach einem der Ansprüche 1 bis 11, **dadurch gekennzeichnet, dass** zur gegenseitigen Verdrehsicherung des ersten und zweiten Deckelteils (3a, 3b) das erste und zweite Deckelteil (3a, 3b) mittels eines Klebstoffs oder mittels einer Presspassung oder einem Formschluss gesichert sind.

13. Luftfederbein (1) nach einem der Ansprüche 1 bis 11, **dadurch gekennzeichnet, dass** zur gegenseitigen Verdrehsicherung des ersten und zweiten Deckelteils (3a, 3b) zwischen dem ersten Deckelteil (3a) und mindestens einem Befestigungselement (26) ein axialer Formschluss wirkt, wobei das Befestigungselement (26) zwischen einer Umschlagsfläche (36) der oberen Biegekante (10) des ersten Deckelteils (3a) und dem zweiten Deckelteil (3b) angeordnet ist.

14. Fahrwerk für ein Kraftfahrzeug, insbesondere ein Luftfedersystem, mit einem Luftfederbein (1) nach einem der Ansprüche 1 bis 13.

## Claims

1. Air spring strut (1) for a motor vehicle comprising an air spring (2) having a shock absorber for spring-cushioning and damping oscillations of a motor vehicle chassis, wherein the air spring (2) comprises an air spring cover (3) and an air spring piston, wherein an air spring bellows (5) made of elastomer material clamped air-tightly between the air spring cover (3) and air spring piston partially delimits a working space (6) filled with compressed air and, while forming a rolling fold (7), rolls on the air spring cover (3) and/or air spring piston, wherein the air spring cover (3) is embodied in two parts with a first cover part (3a) for receiving an absorber bearing (15) and with a second cover part (3b) for fastening the air spring bellows (5), wherein the first cover part (3a) is manufactured from metal and the second cover part (3b) is manufactured from plastic, **characterized in that** the first and second cover part (3a, 3b) are of pot-shaped design, wherein the first cover part (3a) is inserted into the second cover part (3b) .

2. Air spring strut (1) according to Claim 1, **characterized in that** bottoms (34, 35), in particular concavely shaped bottoms, of the first and second cover part (3a, 3b) lie flat on one another.

3. Air spring strut (1) according to Claim 1 or 2, **characterized in that** a sealing element (8) is arranged radially between the first and second cover part (3a, 3b) .

4. Air spring strut (1) according to Claim 3, **characterized in that** the sealing element (8) is arranged in the region of an upper or a lower bending edge (10, 11) of the first cover part (3a).

5. Air spring strut (1) according to one of Claims 1 to 3, **characterized in that** a sleeve (12), in particular a sleeve manufactured from plastic, is arranged radially between the first and second cover part (3a, 3b).

6. Air spring strut (1) according to Claim 5, when referred to Claim 3, **characterized in that** the sealing element (8) is arranged underneath the sleeve (12).

7. Air spring strut (1) according to one of Claims 1 to 6, **characterized in that** the second cover part (3b) has a recess (13) for an additional spring (14) at its end facing the air spring piston.

8. Air spring strut (1) according to Claim 7, **characterized in that** the recess (13) is embodied as a separate additional-spring pot (31), in particular an additional-spring pot manufactured from plastic or metal.

9. Air spring strut (1) according to one of Claims 1 to 8, **characterized in that** the absorber bearing (15) of the shock absorber is arranged in the first cover part (3a) .

10. Air spring strut (1) according to Claim 9, **characterized in that** a closure cap (16), in particular a closure cap manufactured from plastic, is arranged for sealing on the first cover part (3a), above the damper bearing (15), wherein, in particular, the closure cap (16) is secured on the first cover part (3a) by means of a washer (17) and a retaining ring (18) that can be pressed in.

11. Air spring strut (1) according to Claim 10, **characterized in that** a further sealing element (9) is arranged radially between the first cover part (3a) and the closure cap (16).

12. Air spring strut (1) according to one of Claims 1 to 11, **characterized in that** the first and second cover part (3a, 3b) are secured by means of an adhesive or by means of a press fit or positive engagement in order to secure the first and second cover part (3a, 3b) against rotation relative to one another.

13. Air spring strut (1) according to one of Claims 1 to 11, **characterized in that** there is axially positive engagement acting between the first cover part (3a) and at least one fastening element (26) in order to secure the first and second cover part (3a, 3b) against rotation relative to one another, wherein the fastening element (26) is arranged between a folded-over surface (36) of the upper bending edge (10) of the first cover part (3a) and the second cover part (3b).

14. Chassis for a motor vehicle, in particular an air spring system, having an air spring strut (1) according to one of Claims 1 to 13.

## Revendications

1. Jambe de ressort pneumatique (1) pour un véhicule automobile, comprenant un ressort pneumatique (2) pourvu d'un amortisseur de chocs servant à assurer une suspension et un amortissement des vibrations d'un châssis de véhicule automobile, le ressort pneumatique (2) comprenant un couvercle de ressort pneumatique (3) et un piston de ressort pneumatique, un soufflet de ressort pneumatique (5) encastré de manière étanche à l'air, constitué d'un matériau élastomère, délimitant partiellement une chambre de travail (6) remplie d'air comprimé entre le couvercle de ressort pneumatique (3) et le piston de ressort pneumatique, et se déroulant en formant un pli de roulement (7) au niveau du couvercle de ressort pneumatique (3) et/ou du piston de ressort pneumatique, le couvercle de ressort pneumatique (3) étant conçu en deux parties, à savoir une première partie de couvercle (3a) destinée à recevoir un palier d'amortisseur (15) et une deuxième partie de couvercle (3b) destinée à fixer le soufflet de ressort pneumatique (5), la première partie de couvercle (3a) étant réalisée en métal et la deuxième partie de couvercle (3b) en matière plastique, **caractérisée en ce que** la première et la deuxième partie de couvercle (3a, 3b) sont configurées en forme de cuvette, la première partie de couvercle (3a) étant insérée dans la deuxième partie de couvercle (3b).

2. Jambe de ressort pneumatique (1) selon la revendication 1, **caractérisée en ce que** les fonds (34, 35), notamment de forme concave, de la première et de la deuxième partie de couvercle (3a, 3b) reposent l'un sur l'autre sous forme plane.

3. Jambe de ressort pneumatique (1) selon la revendication 1 ou 2, **caractérisée en ce qu'**un élément d'étanchéité (8) est agencé radialement entre la première et la deuxième partie de couvercle (3a, 3b).

4. Jambe de ressort pneumatique (1) selon la revendication 3, **caractérisée en ce que** l'élément d'étanchéité (8) est agencé dans la zone d'un bord de pliage supérieur ou inférieur (10, 11) de la première partie de couvercle (3a).

5. Jambe de ressort pneumatique (1) selon l'une quelconque des revendications 1 à 3, **caractérisée en ce qu'**une gaine (12), notamment réalisée en matière plastique, est agencée radialement entre la première et la deuxième partie de couvercle (3a, 3b).

6. Jambe de ressort pneumatique (1) selon la revendication 5, lorsqu'elle renvoie à la revendication 3, **caractérisée en ce que** l'élément d'étanchéité (8) est agencé sous la gaine (12).

7. Jambe de ressort pneumatique (1) selon l'une quelconque des revendications 1 à 6, **caractérisée en ce que** la deuxième partie de couvercle (3b) comprend un évidement (13) pour un ressort supplémentaire (14) au niveau de son extrémité tournée vers le piston de ressort pneumatique.

8. Jambe de ressort pneumatique (1) selon la revendication 7, **caractérisée en ce que** l'évidement (13) est conçu sous la forme d'une cuvette de ressort supplémentaire (31) séparée, notamment réalisée en matière plastique ou en métal.

9. Jambe de ressort pneumatique (1) selon l'une quelconque des revendications 1 à 8, **caractérisée en ce que** le palier d'amortisseur (15) de l'amortisseur de chocs est agencé dans la première partie de couvercle (3a) .

10. Jambe de ressort pneumatique (1) selon la revendication 9, **caractérisée en ce qu'**un capuchon de fermeture (16), notamment réalisé en matière plastique, destiné à l'étanchéification est agencé sur la première partie de couvercle (3a) au-dessus du palier d'amortisseur (15), le capuchon de fermeture (16) étant notamment retenu sur la première partie de couvercle (3a) par l'intermédiaire d'une rondelle (17) et d'un anneau de retenue compressible (18).

11. Jambe de ressort pneumatique (1) selon la revendication 10, **caractérisée en ce qu'**un élément d'étanchéité supplémentaire (9) est agencé radialement entre la première partie de couvercle (3a) et le capuchon de fermeture (16).

12. Jambe de ressort pneumatique (1) selon l'une quelconque des revendications 1 à 11, **caractérisée en ce que,** pour la retenue contre la rotation en sens opposé de la première et de la deuxième partie de couvercle (3a, 3b), la première et la deuxième partie de couvercle (3a, 3b) sont retenues au moyen d'un adhésif ou au moyen d'un ajustement serré ou d'un accouplement de forme.

13. Jambe de ressort pneumatique (1) selon l'une quelconque des revendications 1 à 11, **caractérisée en ce que,** pour la retenue contre la rotation en sens opposé de la première et de la deuxième partie de couvercle (3a, 3b), un accouplement de forme axial agit entre la première partie de couvercle (3a) et au moins un élément de fixation (26), l'élément de fixation (26) étant agencé entre une surface de revers (36) du bord de pliage supérieur (10) de la première partie de couvercle (3a) et la deuxième partie de couvercle (3b).

14. Châssis pour un véhicule automobile, notamment un système de ressort pneumatique, pourvu d'une jambe de ressort pneumatique (1) selon l'une quelconque des revendications 1 à 13.
